# EUROPÄISCHE PATENTSCHRIFT

(11) **EP 0 907 321 B1**
(45) Veröffentlichungstag und Bekanntmachung des Hinweises auf die Patenterteilung: **11.07.2001**
(21) Anmeldenummer: 97928043.5
(22) Anmeldetag: 27.06.1997
(51) Int. Cl.: A21B 5/02

(54) **VERFAHREN UND VORRICHTUNGEN ZUR HERSTELLUNG VON ESSBAREN, ZUMINDEST ABER ZUM ÜBERWIEGENDEN TEIL ODER ZUR GÄNZE VERROTTBAREN, DÜNNWANDIGEN FORMKÖRPERN**
METHOD AND DEVICES FOR PRODUCTION OF EDIBLE, THIN MOULDED STRUCTURES WHICH ARE AT LEAST PARTIALLY OR COMPLETELY DECOMPOSABLE
PROCEDE ET DISPOSITIF POUR PRODUIRE DES CORPS MOULES COMESTIBLES, A PAROI FINE, PUTRESCIBLES AU MOINS EN GRANDE PARTIE OU EN TOTALITE

(30) Priorität: 28.06.1996 AT 115296
(43) Veröffentlichungstag der Anmeldung: 14.04.1999
(73) Patentinhaber: Franz Haas Waffelmaschinen- Industrie Aktiengesellschaft, 1210 Wien (AT)
(72) Erfinder: HAAS, Franz, sen, A-1210 Wien (AT); HAAS, Johann, A-3400 Klosterneuburg (AT); SACHSENHOFER, Johann, A-1220 Wien (AT)
(74) Vertreter: Berger, Erhard, Dr.
(86) Internationale Anmeldenummer: AT9700144
(87) Internationale Veröffentlichungsnummer: WO9800027

(56) Entgegenhaltungen:
- EP-A- 0 752 209
- WO-A-88/00797
- WO-A-92/10938
- WO-A-95/00023

## Beschreibung

### Gebiet der Erfindung:

Die vorliegende Erfindung bezieht sich allgemein auf die Herstellung von eßbaren, zumindest aber zum überwiegenden Teil oder zur Gänze verrottbaren, dünnwandigen Formkörpern, wie z.B. Becher, Teller, Fast-Food-Verpackungen, Trays, ebene Blätter und dergleichen.

Die vorliegende Erfindung betrifft vor allem ein Verfahren zur Herstellung solcher Formkörper, bei welchem eine auf Kohlehydratbasis hergestellte Backmasse auf den unteren Formteil einer mehrteiligen, vorzugsweise zweiteiligen Backform mit zumindest einem, bei geschlossener Backform mechanisch veränderbaren, inneren Backraum aufgebracht, die Backform geschlossen und die Backmasse in der geschlossenen Backform bei gegenüber der endgültigen Wandstärke des Formkörpers vergrößertem Backraum vorgebacken, durch Verkleinern des Backraumes verdichtet und bei auf die endgültige Wandstärke des Formkörpers verkleinertem Backraum fertiggebacken und das entstandene Produkt erforderlichenfalls konditioniert wird.

Die vorliegende Erfindung betrifft weiters eine Vorrichtung zur Herstellung von geschäumten, dünnwandigen Formkörpern, wie z.B. Becher, Teller, Fast-Food-Verpackungen, Trays, ebene Blätter und dergleichen, aus Backmassen, die auf Kohlehydratbasis hergestellt wurden und sich während des Backprozesses in der Backform ausdehnen.

Als Kohlehydrate kommen neben Stärken und modifizierten Stärken und Mehlen auch Celluloseprodukte in Frage.

### Stand der Technik:

Die bekannten Verfahren zur Herstellung der genannten Formkörper beruhen auf dem Ausbacken der Backmassen in beheizten Backformen, die über die Gestalt ihrer, für den Kontakt mit der Backmasse bestimmten Backflächen die Gestalt des fertigen Produktes und mit dem gegenseitigen Abstand dieser Backflächen die Wandstärke des fertigen Produktes bestimmen.

Die prinzipiellen Schritte in diesem Backvorgang sind:
1. Aufwärmen der Backmasse während des Einbringens einer genau dosierten Menge an Backmasse in die geöffnete Backform und während des Schließens der Backform, wobei auch eine mechanische Teigverteilung durch den oberen Teil der Backform erfolgt.
2. Beginn der Dampfentwicklung durch Verdampfen des in der Backmasse enthaltenen Wassers, sobald an den Kontaktflächen zwischen der Backmasse und den heißen Backflächen der Backform der Siedepunkt überschritten wird
3. Ausfüllen der Backform (bzw. des von den Backflächen der Backform begrenzten inneren Backraumes der Backform) mit Backmasse durch den durch die Dampfentwicklung erzeugten Dampfstoß. Nach etwa 5 bis 20 Sekunden, zumeist nach etwa 10 bis 15 Sekunden wird ein Druckmaximum in der Backform erreicht, danach fällt der Innendruck in der Backform innerhalb von weiteren 10 bis 45 Sekunden, bei optimalem Backverhalten der Backmasse innerhalb von 10 bis 35 Sekunden rasch ab.
4. Parallel dazu verkleistern die Stärkeanteile der Backmasse weitgehend. Die Dampfentwicklung bringt die Ausbildung der porösen Struktur innerhalb der Backmasse mit sich, zumal das Material noch weich und noch nicht formbeständig ist. Am fertigen Produkt lassen sich bei Betrachtung von Querschnitten im Mikroskop und im Elektronenmikroskop 5 Schichten unterscheiden, welche drei Arten von Strukturzonen zuzuordnen sind:
   (a) Außenhaut mit ca. 25 - 50 Mikron an den, an der Innenseite und an der Außenseite (bzw. an der Oberseite und an der Unterseite) des Formkörper liegenden Kontaktflächen zwischen dem Formkörper und den heißen Backflächen der Backform - sehr kleine Poren,
   (b) Zwischenschicht von ca. 300 - 600 Mikron in den beiden, an die Außenhaut jeweils nach innen anschließenden Bereichen des Formkörpers - mittelgroße, flache Poren,
   (c) Kernschicht des Formkörpers mit großen, überwiegend kugelförmigen Poren geringer Dichte mit guter thermischer Isolierung.
5. Nach dem Entfernen der Hauptmenge an Wasser aus der Backmasse steigt die Temperatur im Formkörper, beginnend mit der Außenhaut zunehmend bis auf die Temperatur der jeweiligen Backfläche an. Die Fixierung der Struktur innerhalb der Backmasse (Übergang vom weichen Zustand der Backmasse in den harten, glasartigen Zustand) erfolgt aber erst mit dem weitgehenden Verdampfen des Wassers. Dies geschieht zuerst in der Außenhaut des Formkörpers, im Zentrum des Formkörpers aber erst gegen Ende der Backzeit.
6. Erst wenn auch das Zentrum genügend erhitzt und das Restwasser hier soweit entfernt ist, daß der Glaspunkt des Formkörpers überschritten wird, kann die Backform geöffnet werden, ohne daß noch Dampfreste zu einem Aufblähen des Formkörpers und zum Delaminieren seiner Struktur führen können.

Aus dieser Darstellung ergibt sich, daß das Einbringen von genügend Wärmeenergie in den Zentrumsbereich des Formkörpers, um hier den Ausbackvorgang und die Wasserentfernung voranzutreiben - dies wird durch die isolierende Wirkung der Mittelschicht verzögert -, der bestimmende Faktor für die Gesamtbackzeit ist.

In der Patentliteratur finden sich lediglich Hinweise auf kurzzeitige Wippvorgänge nach dem Einbringen einer dosierten Menge an Backmasse in die geöffnete Backform zur schnellen, gleichmäßigen Verteilung der Backmasse innerhalb der Backform und für ein gewisses vorzeitiges Ausdampfen der Backmasse zum Abfangen der Dampfdruckspitze.

Die US-PS 5 336 511 beschreibt für Pita-Tüten ein Verfahren mit einem Formkern und einem davon getrennten Ausbackkem, um die spezifische Struktur dieser Backware zu erzielen. Hier ist die Position der Kerneinsätze beim Formen und Ausbacken zeitweise nicht fixiert, wodurch ein "Aufschwimmen" der Kerneinsätze in der Backmasse möglich wird, verbunden mit einer Vergrößerung des gegenseitigen Abstandes der Backflächen während des Backvorganges. Dies dürfte sich auf die Backzeit verlängernd auswirken.

Die Anmeldung WO 95/00023 betrifft das Herstellen verdichteter Tüten durch ein kurzzeitiges starkes Komprimieren des Backteiges in der Anfangsphase des Backens. Vor und insbesondere nach diesem Komprimierstoß wird ein vergleichsweise weiter Abstand (2 bis 3-fache Endwandstärke) der Formteile eingehalten, offenbar um ein Ausdampfen trotz Komprimierung zu erleichtern, und diese Position der Formteile wird für den Großteil der Backzeit gehalten (It. Angabe 100 - 110 sec.). Erst in der Schlußphase (Angabe 60 sec) wird wiederum komprimiert und fertiggebacken. Auch hier sind, wie sich aus dem weiten Abstand der Backflächen in der Zwischenphase und den Angaben zur Backzeit - mehr als 160 - 170 sec. - ergibt, normale bis verlängerte Backzeiten erforderlich. Der Backteig wird in einer dreiteiligen Tütenbackform mit bei geschlossener Backform durch Verschieben des Formkernes mechanisch veränderbarem Tütenbackraum in einer ersten Vorbackphase von 10 sec. bei vergrößertem Backraum vorgebakken, dann durch stoßartiges Vorschieben des Formkernes bis auf die endgültige Tütenwandstärke für 1-4 sec. verdichtet, dann durch Zurückziehen des Formkernes auf die 2 bis 3-fache Tütenwandstärke entspannt und in einer Zwischenphase bei auf die 2 bis 3-fache Tütenwandstärke vergrößertem Backraum für weitere 100 sec. gebacken. Am Ende der Zwischenphase wird der Backteig durch Vorschieben des Formkernes bis auf die endgültige Tütenwandstärke wieder verdichtet und schließlich bei auf die endgültige Tütenwandstärke verkleinertem Backraum für 60 sec. fertiggebacken.

Die genannten Formkörper werden üblicherweise in langgestreckten Backöfen hergestellt, in denen jeweils mit einer Backform ausgestattete Backzangen untereinander zu einer endlose Kette verbunden sind und innerhalb des jeweiligen Backofens eine in sich geschlossene Bewegungsbahn durchlaufen. Während eines Umlaufes der Backzangenkette im Backofen passiert jede Backzange eine Aufgießstation, in der die Backmasse in die geöffnete Backform der geöffneten Backzange eingebracht wird. Nach der Aufgießstation werden Backform und Backzange geschlossen und verriegelt und die Backzange durch einen Backraum transportiert, in welchem die Backzange von außen beheizt wird, während im Inneren der Backform der Backprozeß abläuft. Anschließend gelangt die Backzange zu einer Ausgabestation, wo die Backzange entriegelt und der gebackene Formkörper aus der geöffneten Backform der geöffneten Backzange ausgegeben und aus dem Backofen hinaustransportiert wird. Das allfällige Konditionieren der gebackenen Formkörper erfolgt außerhalb des Backofens.

Bei den bekannten Backöfen werden Backzangen zum Herstellen der geschäumten, dünnwandigen Formkörper verwendet, bei denen jeweils eine oder mehrere Backformen in der Backzange aufgenommen sind, deren innerer, von den Backflächen der jeweiligen Backform begrenzter Backraum nach dem Schließen der Backformen und der Backzange nicht mehr verändert werden kann.

Bei einer bekannten Backzange besteht die in ihr enthaltene Backform aus zwei, jeweils in einem eigenen Zangenteil zwischen einem seitlichen Schamierabschnitt und einem seitlichen Endabschnitt aufgenommenen Formhälften, die durch eine Haupt-Formtrennungsebene getrennt und an ihren einander zugewandten Vorderseiten mit Backflächen versehen sind. Bei geschlossener Backzange liegen die Backflächen der beiden Formhälften einander mit Abstand gegenüber und begrenzen zumindest einen inneren Backraum, in dem der jeweilige Formkörper geschäumt und gebacken wird. Die beiden Zangenteile sind an ihren Schamierabschnitten durch ein Scharnier mit zur Haupt-Formtrennungsebene paralleler Schwenkachse schwenkbar verbunden und können bei geschlossener Backzange an den, dann einander gegenüberliegenden, seitlichen Endabschnitten durch zumindest eine, bei geschlossener Backzange zum Geschlossenhalten der Backzange betätigbare Haltevorrichtung verbunden werden. Die seitlichen Endabschnitte der beiden Zangenteile liegen bei geschlossener Backzange über Distanzbolzen aneinander an und tragen die miteinander in und außer Eingriff bringbaren Vorrichtungsteile der Haltevorrichtung.

### Zusammenfassung der Erfindung:

Aufgabe der Erfindung ist es, die Herstellung von eßbaren, zumindest aber zum überwiegenden Teil oder zur Gänze verrottbaren, dünnwandigen Formkörpem zu verbessern.

Zur Lösung dieser Aufgabe wird ein Verfahren zur Herstellung von dünnwandigen Formkörpern vorgeschlagen, bei welchem eine auf Kohlehydratbasis hergestellte Backmasse auf den unteren Formteil einer mehrteiligen, vorzugsweise zweiteiligen Backform mit zumindest einem, bei geschlossener Backform mechanisch veränderbaren, inneren Backraum aufgebracht, die Backform geschlossen und die Backmasse in der geschlossenen Backform bei gegenüber der endgültigen Wandstärke des Formkörpers vergrößertem Backraum vorgebacken, durch Verkleinem des Backraumes verdichtet und bei auf die endgültige Wandstärke des Formkörpers verkleinertem Backraum fertiggebacken wird. Der entstandene Formkörper kann anschließend auf einen vorgegebenen Feuchtigkeitsgehalt im Bereich von 1 - 4 Gew.% oder im Bereich von 8 und mehr Gew.% konditioniert werden. Dieses Verfahren ist erfindungsgemäß dadurch gekennzeichnet, daß die Backmasse bei vergrößertem, innerem Backraum bis zum Erreichen des Dampfdruckmaximums vorgebacken und erst nach dem Erreichen des Dampfdruckmaximums erstmalig komprimiert wird.

Es hat sich für den Fachmann in überraschender Weise gezeigt, daß dadurch eine signifikante Reduktion der Backzeit bei der Herstellung solcher, nach der Waffelbacktechnik hergestellter Formkörper zu erzielen ist. Von dem erfindungsgemäßen Komprimiervorgang, der nach einer Vorbackzeit, während der die Backmasse in der geschlossenen Backform bei einer gegenüber der endgültigen Wandstärke des Formkörpers vergrößerten Wandstärke vorgebacken wird, nach Erreichen des Dampfdruckmaximums an dem vorgebackenen Produkt vorgenommen wird, ist vor allem die zu diesem Zeitpunkt noch nicht ausgehärtete Mittelschicht des Formkörpers betroffen. Bei dem erfindungsgemäßen Komprimiervorgang wird das vorgebackene Produkt vor dem Aushärten der Mittelschicht auf die endgültige Wandstärke des Formkörpers komprimiert und fertig gebacken.

Die Verkürzung der Backzeiten liegt im Bereich von 5% bis über 50% der bisher erforderlichen Zeit.

Die Backmasse kann erfindungsgemäß zwischen etwa 90% und etwa 10% der Gesamtbackzeit bei vergrößertem, innerem Backraum vorgebacken werden.

Vorteilhafterweise kann die Backmasse bei nicht mehr als auf das 4-fache, vorzugsweise auf etwa das 2- bis 2,7-fache der endgültigen Wandstärke des Formkörpers vergrößertem, innerem Backraum vorgebacken werden.

Die Backmasse kann in einem Schritt, stufenweise oder kontinuierlich zunehmend komprimiert werden.

Es hat sich weiters als vorteilhaft herausgestellt, wenn nach dem erstmaligen Komprimieren der Backmasse ihre Komprimierung zur lokalen Druckentlastung des Formkörpers zumindest kurzzeitig auf maximal die Vorbackwandstärke, bevorzugt auf etwa die doppelte endgültige Wandstärke des Formkörpers zurückgenommen wird.

Ohne die tatsächlichen Ursachen für den die Backzeit verkürzenden Effekt angeben zu können, ist doch zu vermuten:
1. daß durch eine Kompression der wenig dichten, noch weichen Mittelschicht deren thermische Isolierwirkung verringert wird,
2. daß durch eine Verringerung des gegenseitigen Abstandes der Backflächen der Wärmeübergang begünstigt wird.

Das bekannte, anfängliche Wippen vor dem Erreichen der Dampfdruckspitze wird davon nicht berührt und ist, wegen der vergleichsweise kurzen Dauer, vermutlich hinsichtlich einer allfälligen Verlängerung oder Verkürzung der Backzeit wenig relevant.

Zu bemerken wäre noch, daß allfällige Gravuren in den Backflächen, die zu an der Formkörperoberfläche nach außen vorspringenden Rippen, Graten und dergleichen führen, in den angesprochenen Wandstärken nicht enthalten sind. Diese Wandstärkeangaben beziehen sich nur auf die sogenannte Kernstärke der nach der Waffelbacktechnik hergestellten Formkörper.

Zur Lösung dieser Aufgabe wird weiters eine Backzange zum Herstellen von geschäumten, dünnwandigen Formkörpern vorgeschlagen, in der eine Backform aufgenommen ist, die aus zwei Formhälften besteht, die jeweils in einem eigenen Zangenteil zwischen einem seitlichen Schamierabschnitt und einem seitlichen Endabschnitt aufgenommen sind. Diese Formhälften sind durch eine Haupt-Formtrennungsebene getrennt und an ihren einander zugewandten Vorderseiten mit Backflächen versehen, die bei geschlossener Backzange einander mit Abstand gegenüberliegen und zumindest einen inneren Backraum begrenzen, in dem die Backmassen geschäumt und gebacken werden. Die beiden Zangenteile sind an ihren Scharnierabschnitten durch ein Scharnier schwenkbar miteinander verbunden und können bei geschlossener Backzange an ihren dann einander gegenüberliegenden, seitlichen Endabschnitten durch zumindest eine Haltevorrichtung miteinander verbunden werden, die bei geschlossener Backzange zum Geschlossenhalten der Backzange betätigt wird. Die seitlichen Endabschnitte der beiden Zangenteile tragen die miteinander in und außer Eingriff bringbaren Vorrichtungsteile der Haltevorrichtung.

Diese Backzange ist erfindungsgemäß dadurch gekennzeichnet, daß zum Verändern des Volumens des inneren Backraumes ihrer Backform die beiden Zangenteile bei geschlossener Backzange und geschlossener Haltevorrichtung zueinander und auseinander bewegbar ausgebildet sind, wobei für die beiden Scharnierabschnitte der Zangenteile zwei verschiedene, zueinander und zur Haupt-Formtrennungsebene parallele Schwenkachsen vorgesehen sind, die zum Verändern des Volumens des inneren Backraumes der Backform gegeneinander verstellbar sind.

Diese Ausbildung erlaubt es, die in der geschlossenen Backform eingeschlossene Backmasse während des Backprozesses zu komprimieren.

Erfindungsgemäß können die zwei Schwenkachsen des Schamieres von einem gekröpften Schamierbolzen gebildet werden, dessen Kröpfungen jeweils einen im Schamierabschnitt des einen Zangenteiles drehbar gelagerten Achsabschnitt mit einem dazu exzentrisch angeordneten, im Scharnierabschnitt des anderen Zangenteiles drehbar gelagerten Achsabschnitt verbinden.

Erfindungsgemäß kann das Scharnier mit zwei gekröpften Scharnierbolzen versehen sein, die jeweils zwei zueinander exzentrisch angeordnete Lagerzapfen besitzen, die jeweils in einem der Scharnierabschnitte drehbar gelagert sind.

Erfindungsgemäß kann ein quer zu den beiden Schwenkachsen des Schamieres angeordneter Schwenkhebel vorgesehen sein, der mit einer der beiden Schwenkachsen drehfest verbunden ist und bei geschlossener Backzange und geschlossener Haltevorrichtung quer zu den beiden Schwenkachsen verschwenkbar ist, um die beiden Zangenteile relativ zueinander zu bewegen.

### Kurze Beschreibung der Zeichnungen:

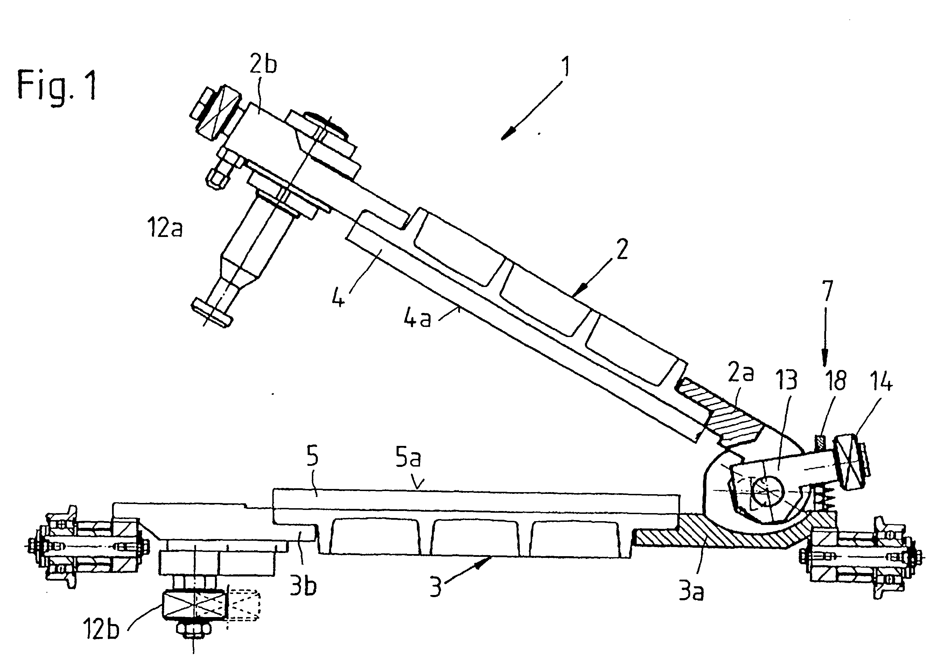

Nachstehend wird ein Ausführungsbeispiel einer Backzange zur Herstellung von geschäumten, dünnwandigen Formkörpern anhand der Zeichnungen näher erläutert. In den Zeichnungen zeigen: Fig. 1 eine Stirnansicht einer aufgeklappten Backzange, Fig. 2 eine geschlossene Backzange mit abgesenktem oberem Zangenteil ohne Backform im Querschnitt, Fig. 3 einen horizontalen Querschnitt des Backzangenscharnieres und Fig. 4 einen vertikalen Querschnitt des Backzangenscharnieres der Backzange, bei angehobenem oberen Zangenteil.

### Beschreibung von Ausführungsbeispielen:

Die Zeichnungen zeigen eine Backzange 1 zum Herstellen von geschäumten, dünnwandigen Formkörpern aus sich während des Backprozesses ausdehnenden Backmassen mit einer, in der Backzange 1 aufgenommenen Backform, die aus zwei jeweils in einem eigenen Zangenteil 2, 3 zwischen einem seitlichen Schamierabschnitt 2a, 3a und einem seitlichen Endabschnitt 2b, 3b aufgenommenen Formhälften 4, 5, die durch eine Haupt-Formtrennungsebene getrennt sind und an ihren einander zugewandten Vorderseiten mit Backflächen 4a, 5a versehen sind. Bei geschlossener Backzange 1 liegen die Backflächen 4a, 5a der beiden Formhälften 4, 5 einander mit Abstand gegenüber und begrenzen zumindest einen inneren Backraum, in dem der jeweilige Formkörper geschäumt und gebacken wird.

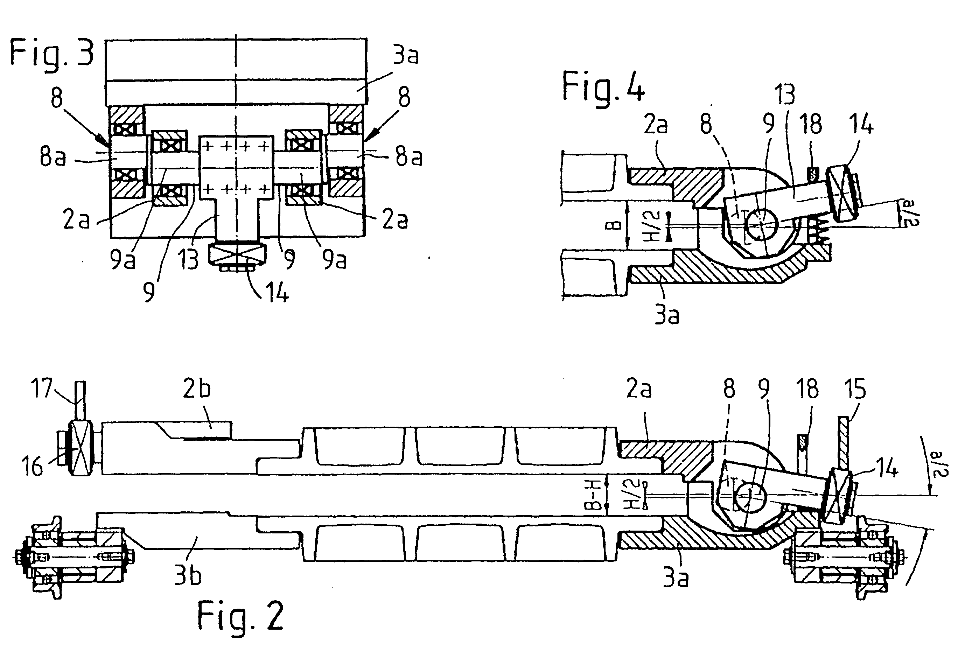

Die beiden Zangenteile 2, 3 sind an ihren Schamierabschnitten 2a, 3a durch ein Scharnier 7 schwenkbar miteinander verbunden, das für die beiden Scharnierabschnitte 2a, 3a zwei verschiedene, zueinander und zur Haupt-Formtrennungsebene parallele Schwenkachsen 8, 9 aufweist. Bei geschlossener Backzange 1 liegen die beiden Schwenkachsen 8, 9 in einer im wesentlichen horizontalen Ebene hintereinander. Die in Fig. 4 vordere Schwenkachse 8 ist dem unteren Zangenteil 3 zugeordnet und die in Fig. 4 hintere Schwenkachse 9 ist dem oberen Zangenteil 2 zugeordnet.

Der innere Backraum wird an seinen äußeren Seitenrändem durch, in der Zeichnung nicht dargestellte, obere und untere, seitliche Abschlußleisten begrenzt. Die oberen Abschlußleisten sind an den, quer zu den Schwenkachsen 8, 9 des Scharnieres 7 verlaufenden äußeren Rändern der oberen Formhälfte 4 befestigt und stehen über deren Backfläche 4a nach unten vor. Die unteren Abschlußleisten sind an den, parallel zu den Schwenkachsen 8, 9 des Schamieres 7 verlaufenden äußeren Rändern der unteren Formhälfte 5 befestigt und stehen über deren Backfläche 5a nach oben vor. Bei geschlossener Backzange stehen die oberen Abschlußleisten über die dann einander gegenüberliegenden Backflächen beider Formhälften 4, 5 nach unten vor und die unteren Abschlußleisten über die dann einander gegenüberliegenden Backflächen beider Formhälften 4, 5 nach oben.

Die bei geschlossener Backzange 1 einander gegenüberliegenden, seitlichen Endabschnitte 2b, 3b der beiden Zangenteile 2, 3 tragen die miteinander in und außer Eingriff bringbaren Vorrichtungsteile 12a, 12b einer von außen betätigbaren Haltevorrichtung zum Geschlossenhalten der Backzange 1. Bei geschlossener Backzange können die Vorrichtungsteile 12a, 12b der Haltevorrichtung miteinander in Eingriff gebracht werden. Die Haltevorrichtung verbindet dann die beiden Zangenteile 2, 3 auf der dem Scharnier 7 gegenüberliegenden Seite der Backzange 1 an den seitlichen Endabschnitten 2b, 3b.

Die beiden Schwenkachsen 8, 9 des Schamieres 7 werden von einem gekröpften Scharnierbolzen gebildet, dessen Kröpfungen jeweils den im Schamierabschnitt 2a des einen Zangenteiles 2 drehbar gelagerten Achsabschnitt 9a mit einem dazu exzentrisch angeordneten, im Schamierabschnitt 3a des anderen Zangenteiles 3 drehbar gelagerten Achsabschnitt 8a verbinden.

Das Scharnier 7 ist mit zwei gekröpften Schamierbolzen versehen, die spiegelbildlich zueinander angeordnet sind und jeweils eine im Scharnierabschnitt 3a des unteren Zangenteiles 3 angeordneten Lagerzapfen 8a und einen dazu exzentrisch angeordneten Lagerzapfen 9a im Scharnierabschnitt 2a des oberen Zangenteiles 2 besitzen.

Das Scharnier 7 ist mit einem, quer zu beiden Schwenkachsen 8, 9 angeordneten Schwenkhebel 13 versehen, der mit der in Fig. 4 hinteren Schwenkachse 9 drehfest verbunden ist und an seinem freien Ende eine Steuerrolle 14 trägt, die für den Eingriff mit im Backofen angeordneten Führungsleisten 15 vorgesehen ist.

Am freien Ende des oberen Zangenteiles 2 ist ebenfalls eine Steuerrolle 16 vorgesehen, die für den Eingriff mit im Backofen angeordneten Führungsleisten 17 vorgesehen ist.

Bei geschlossener Backzange 1 und geschlossener Haltevorrichtung wird der obere Zangenteil 2 über die mit den Führungsleisten 15 und 17 des Backofens im Eingriff stehenden Steuerrollen 14 und 16 zum unteren Zangenteil 3 hin, im wesentlichen senkrecht zur Haupt-Formtrennungsebene der Backform abwärts bewegt, um den inneren Backraum der Backform zu verkleinern und dadurch die im inneren Backraum befindliche Backmasse zu komprimieren. Dabei wird auf der Scharnierseite der Backzange der gekröpfte Schamierbolzen durch die Steuerrolle 14 und den Schwenkhebel 13 verschwenkt, wobei der Schwenkhebel 13 nach unten in die in Fig. 2 dargestellte Position geschwenkt und gleichzeitig die hintere Schwenkachse 9 gegenüber der Haupt-Formtrennungsebene der Backform nach unten bewegt wird.

Zum Entlasten der im inneren Backraum der Backform eingeschlossenen Backmasse wird der obere Zangenteil 2, bei geschlossener Backzange 1 und geschlossener Haltevorrichtung, über die Steuerrollen 14 und 16, die mit anderen Führungsleisten des Backofens im Eingriff stehen, relativ zum unteren Zangenteil 3 im wesentlichen senkrecht zur Haupt-Formtrennungsebene der Backform aufwärts bewegt. Dabei wird auf der Schamierseite der Backzange der gekröpfte Schamierbolzen über den Schwenkhebel 13 nach oben verschwenkt bis der Schwenkhebel 13 an einem Anschlag 18 des unteren Scharnierabschnittes 3a anliegt. Dabei wird die hintere Schwenkachse 9 gegenüber der Haupt-Formtrennungsebene der Backform nach oben bewegt.

## Patentansprüche

1. Verfahren zur Herstellung von eßbaren, zumindest aber zum überwiegenden Teil oder zur Gänze verrottbaren, dünnwandigen Formkörpern, wie z.B. Bechern, Tellern, Fast-FoodVerpackungen, Trays, ebenen Blättern und dergleichen, bei welchem eine auf Kohlehydratbasis hergestellte Backmasse auf den unteren Formteil einer mehrteiligen, vorzugsweise zweiteiligen Backform mit zumindest einem, bei geschlossener Backform mechanisch veränderbaren, inneren Backraum aufgebracht, die Backform geschlossen und die Backmasse in der geschlossenen Backform bei gegenüber der endgültigen Wandstärke des Formkörpers vergrößertem Backraum vorgebacken, durch Verkleinern des Backraumes verdichtet und bei auf die endgültige Wandstärke des Formkörpers verkleinertem Backraum fertiggebacken und der entstandene Formkörper gegebenenfalls konditioniert wird, **dadurch gekennzeichnet,** daß die Backmasse bei vergrößertem, innerem Backraum bis zum Erreichen des Dampfdruckmaximums vorgebakken und erst nach dem Erreichen des Dampfdruckmaximums erstmalig komprimiert wird.

2. Verfahren nach Anspruch 1, dadurch gekennzeichnet, daß die Backmasse zwischen etwa 90% und etwa 10% der Gesamtbackzeit bei vergrößertem, innerem Backraum vorgebacken wird.

3. Verfahren nach Anspruch 1 oder 2, dadurch gekennzeichnet, daß die Backmasse bei nicht mehr als auf das 4-fache, vorzugsweise auf etwa das 2- bis 2,7-fache der endgültigen Wandstärke des Formkörpers vergrößertem, innerem Backraum vorgebacken wird.

4. Verfahren nach einem oder mehreren der Ansprüche 1 bis 3, dadurch gekennzeichnet, daß die Backmasse in einem Schritt, stufenweise oder kontinuierlich zunehmend komprimiert wird.

5. Verfahren nach einem oder mehreren der Ansprüche 1 bis 4, dadurch gekennzeichnet, daß nach dem erstmaligen Komprimieren der Backmasse ihre Komprimierung zur lokalen Druckentlastung des Formkörpers zumindest kurzzeitig auf maximal die Vorbackwandstärke, bevorzugt auf etwa die doppelte endgültige Wandstärke des Formkörpers zurückgenommen wird.

6. Backzange zum Herstellen von geschäumten, dünnwandigen Formkörpern aus sich während des Backprozesses ausdehnenden auf Kohlehydratbasis hergestellten Backmassen in einer, in der Backzange (1) aufgenommenen Backform, die aus zwei, jeweils in einem eigenen Zangenteil (2, 3) zwischen einem seitlichen Scharnierabschnitt (2a, 3a) und einem seitlichen Endabschnitt (2b, 3b) aufgenommenen Formhälften (4, 5) besteht, die durch eine Haupt-Formtrennungsebene getrennt und an ihren einander zugewandten Vorderseiten mit Backflächen (4a, 5a) versehen sind, die bei geschlossener Backzange (1) einander mit Abstand gegenüberliegen und zumindest einen inneren Backraum begrenzen, in dem die Backmassen geschäumt und gebacken werden, wobei die beiden Zangenteile (2, 3) an ihren Scharnierabschnitten (2a, 3a) durch ein Scharnier (7) schwenkbar miteinander verbunden sind und an ihren, bei geschlossener Backzange (1) einander gegenüberliegenden, seitlichen Endabschnitten (2b, 3b) durch zumindest eine, bei geschlossener Backzange (1) zum Geschlossenhalten der Backzange (1) betätigbare Haltevorrichtung (12a, 12b) verbindbar sind, wobei die seitlichen Endabschnitte (2b, 3b) die miteinander in und außer Eingriff bringbaren Vorrichtungsteile (12a, 12b) der Haltevorrichtung tragen, insbesonders zur Durchführung des Verfahren nach einem der Ansprüche 1 bis 5 dadurch gekennzeichnet, daß zum Verändern des Volumens des inneren Backraumes der Backform die beiden Zangenteile (2, 3) bei geschlossener Backzange (1) und geschlossener Haltevorrichtung (12a, 12b) zueinander und auseinander bewegbar ausgebildet sind, wobei für die beiden Schamierabschnitte (2a, 3a) zwei verschiedene, zueinander und zur Haupt-Formtrennungsebene parallele Schwenkachsen (8, 9) vorgesehen sind, die zum Verändern des Volumens des inneren Backraumes der Backform gegeneinander verstellbar sind.

7. Backzange nach Anspruch 6, dadurch gekennzeichnet, daß die zwei Schwenkachsen (8, 9) des Scharnieres (7) von einem gekröpften Schamierbolzen gebildet werden, dessen Kröpfungen jeweils einen im Scharnierabschnitt (2a) des einen Zangenteiles (2) drehbar gelagerten Achsabschnitt (9a) mit einem dazu exzentrisch angeordneten, im Schamierabschnitt (3a) des anderen Zangenteiles (3) drehbar gelagerten Achsabschnitt (8a) verbinden.

8. Backzange nach Anspruch 7, dadurch gekennzeichnet, daß das Scharnier (7) mit zwei gekröpften Scharnierbolzen versehen ist, die jeweils zwei zueinander exzentrisch angeordnete Lagerzapfen (8a, 9a) besitzen, die jeweils in einem der Scharnierabschnitte (2a, 3a) drehbar gelagert sind.

9. Backzange nach einem der Ansprüche 6 bis 8, dadurch gekennzeichnet, daß ein quer zu den beiden Schwenkachsen (8, 9) des Scharnieres (7) angeordneter Schwenkhebel (13) vorgesehen ist, der mit einer der beiden Schwenkachsen (8, 9) drehfest verbunden ist und bei geschlossener Backzange (1) und geschlossener Haltevorrichtung (12a, 12b) quer zu den beiden Schwenkachsen (8, 9) verschwenkbar ist, um die beiden Zangenteile (2, 3) relativ zueinander zu bewegen.

## Claims

1. Method of producing edible, but at least predominantly or wholly decomposable, thin-walled shaped articles, e.g. tubs, plates, fast-food packaging, trays, planar sheets and the like, in the case of which a carbohydrate-based baking mixture is provided in the bottom mould part of a multi-part, preferably two-part, baking mould with at least one, inner baking chamber, which can be altered mechanically with the baking mould closed, the baking mould is closed and the baking mixture in the closed baking mould is pre-baked, with the baking chamber in an enlarged state in comparison with the definitive wall thickness of the shaped article, is compressed by virtue of the baking chamber being reduced in size and is baked to completion with the baking chamber reduced in size to the definitive wall thickness of the shaped article, and the resulting shaped article is, if appropriate, conditioned, characterized in that the baking mixture is pre-baked with the inner baking chamber in an enlarged state until the steam-pressure maximum is reached, and it is only compressed once the steam-pressure maximum has been reached.

2. Method according to Claim 1, characterized in that the baking mixture is pre-baked with the inner baking chamber in an enlarged state for between approximately 90% and approximately 10% of the overall baking time.

3. Method according to Claim 1 or 2, characterized in that the baking mixture is pre-baked with the inner baking chamber enlarged to not more than four times, preferably to approximately 2 to 2.7 times, the definitive wall thickness of the shaped article.

4. Method according to one or more of Claims 1 to 3, characterized in that the baking mixture is compressed to an increasing extent in one or more steps or continuously.

5. Method according to one or more of Claims 1 to 4, characterized in that, once the baking mixture has been compressed for the first time, its compression is reversed at least briefly, for locally relieving the shaped article of pressure, to at most the pre-baking wall thickness, preferably to approximately double the definitive wall thickness of the shaped article.

6. Baking tongs for producing foamed, thin-walled shaped articles from carbohydrate-based baking mixtures, which expand during the baking process, in a baking mould which is accommodated in the baking tongs (1) and comprises two mould halves (4, 5) which are each accommodated in a dedicated tong part (2, 3), between a lateral hinge section (2a, 3a) and a lateral end section (2b, 3b), are separated by a main mould-parting plane and are provided, on their mutually facing front sides, with baking surfaces (4a, 5a) which, with the baking tongs (1) closed, are spaced apart opposite one another and bound at least one inner baking chamber in which the baking mixtures are foamed and baked, it being the case that the two tong parts (2, 3), at their hinge sections (2a, 3a), are connected pivotably to one another by a hinge (7) and, at their lateral end sections (2b, 3b), which are located opposite one another with the baking tongs (1) closed, can be connected by at least one retaining device (12a, 12b) which can be actuated, with the baking tongs (1) closed, in order to keep the baking tongs (1) closed, it being the case that the lateral end sections (2b, 3b) bear the retaining-device parts (12a, 12b), which can be engaged with one another and disengaged from one another, in particular for implementing the method according to one of Claims 1 to 5, characterized in that, in order to alter the volume of the inner baking chamber of the baking mould, the two tong parts (2, 3) are designed such that they can be moved towards one another and apart from one another with the baking tongs (1) closed and the retaining device (12a, 12b) closed, there being provided for the two hinge sections (2a, 3a) two different pivot pins (8, 9) which are parallel to one another, and to the main mould-parting plane, and can be adjusted in relation to one another in order for the volume of the inner baking chamber of the baking mould to be altered.

7. Baking tongs according to Claim 6, characterized in that the two pivot pins (8, 9) of the hinge (7) are formed by an angled hinge bolt, of which the angled portions each connect a pin section (9a) which is mounted rotatably in the hinge section (2a) of one tong part (2) to a pin section (8a) which is arranged eccentrically in relation to the first pin section and is mounted rotatably in the hinge section (3a) of the other tong part (3).

8. Baking tongs according to Claim 7, characterized in that the hinge (7) is provided with two angled hinge bolts which each have two bearing journals (8a, 9a) which are arranged eccentrically in relation to one another and are each mounted rotatably in one of the hinge sections (2a, 3a).

9. Baking tongs according to one of Claims 6 to 8, characterized in that there is provided a pivot lever (13) which is arranged transversely to the two pivot pins (8, 9) of the hinge (7), is connected in a rotationally fixed manner to one of the two pivot pins (8, 9) and, with the baking tongs (1) closed and the retaining device (12a, 12b) closed, can be pivoted transversely to the two pivot pins (8, 9) in order to move the two tongs parts (2, 3) relative to one another.

## Revendications

1. Procédé de fabrication de corps moulés comestibles, mais putrescibles au moins en grande partie ou en totalité, à paroi fine, comme des coupes, des assiettes, des emballages de restauration rapide, des plateaux, des feuilles planes et analogues, dans lequel on met une pâte à cuire fabriquée à base de glucides sur la partie inférieure d'un moule de cuisson constitué de plusieurs parties, de préférence de deux parties, avec au moins un espace de cuisson intérieur qui peut être modifié de façon mécanique lorsque le moule de cuisson est fermé, on ferme le moule de cuisson, on précuit la pâte à cuire dans le moule de cuisson fermé avec un espace de cuisson agrandi par rapport à l'épaisseur de paroi finale du corps moulé, on la comprime en réduisant l'espace de cuisson, on finit la cuisson avec un espace de cuisson réduit à l'épaisseur de paroi finale du corps moulé et on conditionne éventuellement le corps moulé créé, caractérisé en ce qu'on précuit la pâte à cuire avec un espace de cuisson intérieur agrandi jusqu'à atteindre le maximum de pression de vapeur et en ce qu'on ne la comprime pour la première fois que lorsque le maximum de pression de vapeur a été atteint.

2. Procédé selon la revendication 1, caractérisé en ce qu'on précuit la pâte à cuire entre environ 90 % et environ 10 % du temps de cuisson total avec un espace de cuisson intérieur agrandi.

3. Procédé selon la revendication 1 ou 2, caractérisé en ce qu'on précuit la pâte à cuire avec un espace de cuisson intérieur agrandi mais pas plus de 4 fois, de préférence d'environ 2 à 2,7 fois, l'épaisseur de paroi finale du corps moulé.

4. Procédé selon l'une ou plusieurs des revendications 1 à 3, caractérisé en ce qu'on comprime la pâte à cuire en une étape, par degrés ou de façon continûment croissante.

5. Procédé selon l'une ou plusieurs des revendications 1 à 4, caractérisé en ce qu'après la première compression de la pâte à cuire, on réduit sa compression en vue d'une diminution de pression locale du corps moulé, au moins brièvement, au maximum à l'épaisseur de paroi de la précuisson, de préférence à environ le double de l'épaisseur de paroi finale du corps moulé.

6. Pince de cuisson pour fabriquer des corps moulés ayant moussé, à paroi fine à partir de pâtes à cuire fabriquées à base de glucides et gonflant pendant le processus de cuisson dans un moule de cuisson reçu dans la pince de cuisson (1) et qui est constitué de deux moitiés de moule (4, 5) logées chacune dans une partie de pince particulière (2, 3) entre un tronçon de charnière latéral (2a, 3a) et un tronçon d'extrémité latéral (2b, 3b), qui sont séparées par un plan de séparation de moule principal et qui sont munies sur leurs faces avant tournées l'une vers l'autre de surfaces de cuisson (4a, 5a) qui sont elles-mêmes l'une en face de l'autre à une certaine distance lorsque la pince de cuisson (1) est fermée et qui limitent au moins un espace de cuisson intérieur dans lequel les pâtes à cuire moussent et sont cuites, les deux parties de pince (2, 3) étant assemblées l'une à l'autre de manière à pouvoir pivoter par une charnière (7) au niveau de leurs tronçons de charnière (2a, 3a) et pouvant être assemblées, lorsque la pince de cuisson (1) est fermée, au niveau de leurs tronçons d'extrémité latéraux (2b, 3b) opposés l'un à l'autre, par au moins un dispositif de retenue (12a, 12b) pouvant être actionné lorsque la pince de cuisson (1) est fermée pour maintenir fermée la pince de cuisson (1), et les tronçons d'extrémité latéraux (2b, 3b) portant les parties de dispositif (12a, 12b) du dispositif de retenue qui peuvent être mises en prise ou hors prise l'une par rapport à l'autre, notamment pour la mise en oeuvre du procédé selon l'une des revendications 1 à 5, caractérisée en ce que, pour modifier le volume de l'espace de cuisson intérieur du moule de cuisson, les deux parties de pince (2, 3) sont conçues de manière à pouvoir se rapprocher ou s'écarter l'une de l'autre lorsque la pince de cuisson (1) est fermée et lorsque le dispositif de retenue (12a, 12b) est fermé, deux axes de pivotement (8, 9) différents parallèles l'un à l'autre et au plan de séparation de moule principal étant prévus pour les deux tronçons de charnière (2a, 3a) et étant déplaçables l'un par rapport à l'autre pour modifier le volume de l'espace de cuisson intérieur du moule de cuisson.

7. Pince de cuisson selon la revendication 6, caractérisée en ce que les deux axes de pivotement (8, 9) de la charnière (7) sont formés par un axe de charnière contrecoudé dont les coudes relient respectivement un tronçon d'axe (9a) monté rotatif dans le tronçon de charnière (2a) d'une partie de pince (2) et un tronçon d'axe (8a) agencé excentrique par rapport au précédent et monté rotatif dans le tronçon de charnière (3a) de l'autre partie de pince (3).

8. Pince de cuisson selon la revendication 7, caractérisée en ce que la charnière (7) est munie de deux axes de charnière contrecoudés qui ont chacun deux tourillons (8a, 9a) qui sont agencés excentriques l'un par rapport à l'autre et qui sont logés rotatifs respectivement dans un des tronçons de charnière (2a, 3a).

9. Pince de cuisson selon l'une des revendications 6 à 8, caractérisée en ce qu'il est prévu un levier pivotant (13) qui est agencé transversalement par rapport aux deux axes de pivotement (8, 9) de la charnière (7), qui est assemblé solidaire en rotation avec l'un des deux axes de pivotement (8, 9) et qui peut pivoter transversalement par rapport aux deux axes de pivotement (8, 9), lorsque la pince de cuisson (1) est fermée et lorsque le dispositif de retenue (12a, 12b) est fermé, pour déplacer les deux parties de pince (2, 3) l'une par rapport à l'autre.
